# EUROPÄISCHE PATENTSCHRIFT

(11) **EP 4 145 104 B1**
(45) Veröffentlichungstag und Bekanntmachung des Hinweises auf die Patenterteilung: **30.04.2025**
(21) Anmeldenummer: 22194018.2
(22) Anmeldetag: 06.09.2022
(51) Int. Cl.: G01N 1/18, G01N 1/20, G01N 1/10

(54) **ZWISCHENSPEICHER-DOSIEREINHEIT UND SYSTEM SOWIE VERFAHREN ZUR ENTNAHME VON PROBEN EINES FLUIDS**
INTERMEDIATE STORAGE METERING UNIT AND SYSTEM AND METHOD FOR SAMPLING FLUID SAMPLES
UNITÉ DE DOSAGE FORMANT DISPOSITIF DE STOCKAGE INTERMÉDIAIRE, AINSI QUE PROCÉDÉ DE PRÉLÈVEMENT DES ÉCHANTILLONS D'UN FLUIDE

(30) Priorität: 06.09.2021 DE 102021122997
(43) Veröffentlichungstag der Anmeldung: 08.03.2023
(73) Patentinhaber: Helmholtz-Zentrum Potsdam - Deutsches GeoForschungsZentrum GFZ Stiftung des Öffentlichen Rechts des Landes Brandenburg, 14473 Potsdam (DE)
(72) Erfinder: Andermann, Christoff, 14558 Nuthetal (DE); Queißer, Torsten, 14482 Potsdam (DE); Reich, Markus, 14542 Werder (Havel) (DE)
(74) Vertreter: Hertin und Partner Rechts- und Patentanwälte PartG mbB

(56) Entgegenhaltungen:
- US-A- 4 697 462
- US-A1- 2020 390 423

## Beschreibung

Die Erfindung betrifft eine Zwischenspeicher-Dosiereinheit für die Entnahme von Proben eines Fluids. Die Zwischenspeicher-Dosiereinheit umfasst dabei ein Behältnis mit einem Einlass und einem Zweiwegauslass. Der Zweiwegauslass weist ein Steigrohr als einen ersten Auslass und einen Abfluss als einen zweiten Auslass auf.

Weiterhin betrifft die Erfindung ein System und ein Verfahren zur Entnahme von Proben eines Fluids, bevorzugt Wasser. Das System umfasst insbesondere eine Probengewinnungseinheit sowie mindestens ein Probengefäß, wobei die Probengewinnungseinheit dazu eingerichtet ist, ein Fluid bereitzustellen und das mindestens eine Probengefäß dazu eingerichtet ist, ein Fluid in sich aufzunehmen und zu speichern. Zwischen der Probengewinnungseinheit und dem mindestens einem Probengefäß ist zudem ein Fluidtransfer möglich. Der Probengewinnungseinheit und dem mindestens einem Probengefäß ist dabei die Zwischenspeicher-Dosiereinheit der eingangs genannten Art zwischengeschaltet.

### Hintergrund und Stand der Technik

Aus dem Stand der Technik ist die Entnahme von Proben (oder auch Stichproben) nach festgelegten Verfahren bekannt. Eine Probenentnahme dient dazu, zuverlässige Aussagen über die Qualität, Beschaffenheit oder Zusammensetzung eines bestimmten Materials zu machen. Das Ziel ist es, eine möglichst repräsentative und reproduzierbare Probe zu generieren, die möglichst dem tatsächlichen, realen Tatbestand zum Zeitpunkt der Entnahme entspricht. Probennahmen finden insbesondere im Zusammenhang mit Wasser bzw. Abwasser Anwendung. Häufig ist die Probenahme dabei gesetzlich vorgeschrieben. Sie hilft insbesondere Oberflächengewässer zu schützen, Abwasserbehandlungsprozesse zu überwachen oder Einleiter in die Kanalisation zu ermitteln.

Weiterhin sind Vorrichtungen bekannt, die eine automatische Probennahme ermöglichen.

Derartige Vorrichtungen werden unter anderem für industrielle und kommunale Kläranlagen oder Wasserbehörden verwendet. Die US 5433120 A offenbart zum Beispiel einen Probennehmer mit einem T-Ventil, welches über eine Motorsteuerung verfügt. Die aus dem Stand der Technik bekannten Vorrichtungen weisen jedoch den Nachteil auf, dass eine Probe nicht zeitlich kumulativ entnommen und gleichzeitig einer Filterung unterzogen werden kann. Darüber hinaus fehlt es den Vorrichtungen an einer "smarten" Probenentnahme, die es ermöglicht unterschiedliche Probengefäße individuell anzusteuern und automatisiert zu befüllen, wobei die Lagerung unter atmosphärischen Abschluss erfolgt.

US4697462A oder US2020/390423A1 offenbart eine Zwischenspeicher-Dosiereinheit für die Entnahme von Proben eines Fluids, bei dem sich der Steigschacht außerhalb des Behälters befindet.

### Aufgabe der Erfindung

Die Aufgabe der Erfindung war es daher die Nachteile aus dem Stand der Technik zu beseitigen und eine Vorrichtung und ein System sowie ein Verfahren zur automatisierten Probenentnahme bereitzustellen, wobei eine Probe zeitlich kumulativ entnommen werden sowie gleichzeitig einer Filterung unterliegen kann und darüber hinaus eine Vielzahl von einzelnen Probengefäßen individuell befüllt werden können.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung eine Zwischenspeicher-Dosiereinheit für die Entnahme von Proben eines Fluids umfassend ein Behältnis mit einem Einlass und einem Zweiwegauslass, wobei der Zweiwegauslass
- ein Steigrohr als einen ersten Auslass und
- einen Abfluss als einen zweiten Auslass umfasst.

Der Einsatz der vorgeschlagenen Zwischenspeicher-Dosiereinheit für die Entnahme von Proben eines Fluids ist aus dem Stand der Technik weder bekannt noch ist sie einer Fachperson in diesem Kontext nahegelegt. Ziel ist es im Allgemeinen bei der Entnahme einer Probe, jeweils den Ist-Zustand eines Fluidreservoirs zu konservieren, und diesen anschließend zu analysieren. Es erschien daher bisher nicht zweckdienlich vor dem Speichern einer Probe, diese einer Vorbearbeitung bzw. Filterung zu unterziehen.

Es hat sich gezeigt, dass eine Zwischenspeicher-Dosiereinheit die Qualität der Proben erhöht und sich insbesondere verbesserte Analysen generieren lassen. Die Zwischenspeicher-Dosiereinheit ermöglicht nämlich vorteilhaft das Sammeln und kontrollierte Auslassen eines Fluids, wobei die Verschmutzung einer Probe durch Schwimmstoffe und/oder Bodensatz oder ähnlichem verhindert und sämtliche geo-chemische Eigenschaften des Fluids und/oder der Probe beibehalten werden. Die Zwischenspeicher-Dosiereinheit ermöglicht dadurch vor allem eine zeitlich kumulativ integrierte und qualitativ verbesserte sowie zeitlich eindeutig zuordenbare Probenahme.

So können z.B. bei Starkregenereignissen zunächst größere Volumina aufgefangen und dann daraus (automatisch) eine kleine Probe entnommen werden, so dass ein bestimmter Zeitbereich während eines (Regen-)Ereignisses für die Probenahme einbezogen wird. Außerdem kann mit dem Einlass, welcher bevorzugt mit einem Einlassventil versehen ist, ein weiterer Zufluss verhindert werden, so dass ein Aufstau entsteht, der nach Abschluss der vorangegangenen Beprobung und Entleerung des Auffangbehälters ebenfalls direkt eingelassen und beprobt werden kann.

Im Sinne der Erfindung ist das Fluid besonders stark bevorzugt eine Flüssigkeit. Es kann sich dabei bevorzugt um sämtliche Flüssigkeiten wie auch Suspensionen handeln. Weiterhin können auch Schwimmstoffe, Schwebstoffe und/oder Partikel in einer Flüssigkeit umfasst sein. Bevorzugt kann das Fluid auch als ein Gas ausgestaltet sein.

Die Zwischenspeicher-Dosiereinheit ist bevorzugt als eine technische Einheit oder Baugruppe oder auch eine Vorrichtung zu verstehen, welche über einen Einlass ein Fluid aufnehmen, in einem Behältnis (zwischen-) speichern und über einen Auslass ein Fluid absondern kann. Auf dem Weg zwischen Einlass und Auslass erfährt das Fluid bevorzugt eine Filterung. Sowohl der Einlass als auch der Auslass sind bevorzugt kompatibel für verschiedenste Leitungssysteme, wodurch sich der Einsatz der Zwischenspeicher-Dosiereinheit vorteilhaft in herkömmliche Systeme für die Entnahme von Proben eines Fluids integrieren lässt, ohne dass größere konstruktive Umbauten notwendig sind. Die Zwischenspeicher-Dosiereinheit ermöglicht eine Filterung von einem Fluid ohne den Einsatz von Fremdenergie. Der Einlass und der Auslass sind dabei bevorzugt so konzipiert, dass ein Fluid, ausschließlich aufgrund der Gravitation (bei Flüssigkeiten) oder dem Auftrieb (bei Gasen) ausgehend vom Einlass zum Auslass geleitet werden kann. Innerhalb der Zwischenspeicher-Dosiereinheit kann das Fluid von unerwünschten Komponenten getrennt oder aber auch lediglich gesammelt werden.

Ein Zweiwegauslass ist bevorzugt als ein Auslass zu verstehen, welcher zwei alternativ zueinanderstehende Auslässe aufweist. Diese Auslässe lassen sich dabei vorzugsweise individuell öffnen und/oder schließen. Es versteht sich, dass die suspendierten Stoffe des in der Zwischenspeicher-Dosiereinheit umfassten Fluids innerhalb des Behältnisses nicht vollständig gleichmäßig durchmischt vorliegen, wodurch das Fluid bereichsweise unterschiedliche Eigenschaften aufweist. Indem die alternativ zueinanderstehenden Auslässe bevorzugt an unterschiedlichen Stellen oder Positionen innerhalb der Zwischenspeicher-Dosiereinheit bzw. des Behältnisses platziert sind, können unterschiedliche Bereiche bzw. Teilvolumina eines Fluidreservoirs voneinander separiert werden. Der Zweiwegauslass kann entsprechend als eine Filtereinheit wirken. Besonders vorteilhaft ermöglicht der erfindungsgemäße Zweiwegauslass daher neben dem Auslassen als solches eine Separierung von dem Fluid, bevorzugt eine Flüssigkeit, von Schwimmstoffen, Schwebstoffen und/oder Partikeln.

Diesbezüglich kommt dem erfindungsgemäßen Steigrohr eine wesentliche Aufgabe zu. Das Steigrohr ist bevorzugt so in dem Behältnis der Zwischenspeicher-Dosiereinheit platziert, dass eine Auslassöffnung bzw. Rohröffnung möglichst weit in das Behältnis hineinragt und von einem Boden oder Rand des Behältnisses beabstandet ist. Dies führt dazu, dass vorteilhaft ein Teilvolumen des in dem Behältnis umfassten Fluids ausgelassen werden kann, welches von einem Rand des Behältnisses beabstandet ist und durch diesen nicht beeinflusst wird. Bei einer Flüssigkeit lagern sich zum Beispiel häufig Sedimente, Schwimmstoffe, Schwebstoffe und/oder Partikel im Randbereich beispielsweise als Bodensatz ab. Durch die Entnahme der Flüssigkeit aus einem randfernen Bereich des Behältnisses kann in vorteilhafter Weise das Fluid ausgelassen werden, welches diese Sedimente, Schwimmstoffe, Schwebstoffe und/oder Partikel nicht umfasst. Die Sedimente, Schwimmstoffe, Schwebstoffe und/oder Partikel bleiben entsprechend weiterhin in der Zwischenspeicher- Dosiereinheit zurück. Bevorzugt ist das Steigrohr als ein erster Auslass zu verstehen. Das Steigrohr ist dabei innerhalb des Behältnisses so ausgerichtet, dass das Fluid, bevorzugt eine Flüssigkeit, gravitativ in die Rohröffnung eingebracht werden kann. Im Prinzip ist dadurch bevorzugt keine Pumpe oder anderweitige Mittel unbedingt notwendig, die ein Durchströmen des Steigrohrs durch das Fluid, bevorzugt eine Flüssigkeit, unterstützen. Ein Steigrohr ermöglicht im Sinne der Erfindung unter anderem die Entnahme einer Probe aus einer Wassersäule innerhalb der Zwischenspeicher-Dosiereinheit.

Um auch grobe Partikel (bspw. Partikelverklumpungen) sowie die im Behältnis verbleibende Verschmutzung (Sedimente, Schwimmstoffe, Schwebstoffe und/oder Partikel oder Bodensatz) zu entsorgen oder aber auch zu untersuchen ist der Abfluss, auch als zweiter Auslass bezeichnet, vorgesehen. Vorzugsweise weist der Abfluss eine im Vergleich zum Steigrohr wesentlich größere Auslassöffnung auf, welche in einem Rand- oder Bodenbereich des Behältnisses der Zwischenspeicher-Dosiereinheit angeordnet ist. Es versteht sich, dass Partikel, Schwimmstoffe, Sedimente sich an einem Boden oder Rand des Behältnisses aufgrund von Schwerkraft absetzen und einen Bodensatz erzeugen, wobei der Bodensatz sich auch auf dem Verschluss des Abflusses ablagern kann. Durch Öffnen des Verschlusses kann ein im Behältnis der Zwischenspeicher-Dosiereinheit verbleibendes Fluid mitsamt Verschmutzung in einer Abflussleitung entsorgt werden. Besonders bevorzugt kann durch das bevorzugte Steigrohr eine Probe entnommen werden, während nach dem Abfüllvorgang überschüssiges Probenwasser gravitativ über den Abfluss entsorgt wird.

Das in der vorgeschlagenen Zwischenspeicher-Dosiereinheit umfasste Behältnis verjüngt sich bevorzugt mindestens abschnittsweise konisch in Richtung des Zweiwegauslasses. Das Behältnis ist dabei vorzugsweise in zwei Abschnitte einzuteilen, nämlich in einen oberen zylinderförmigen Abschnitt und einen unteren sich konisch in Richtung eines Auslasses verjüngenden Abschnitt. Durch die Verjüngung wirkt das Behältnis wie ein Trichter, wodurch insbesondere sichergestellt werden kann, dass der gesamte Inhalt des Behältnisses entleert werden kann. Die Begriffe "oben" und "unten" sind in Relation zu einem Boden zu verstehen, wobei ein oberer Abschnitt des Behältnisses eine größere Distanz von einem Boden aufweist, als ein unterer Abschnitt.

In einer weiteren bevorzugten Ausführungsform ist die Zwischenspeicher-Dosiereinheit dadurch gekennzeichnet, dass der Abfluss des Zweiwegauslasses und/oder der Einlass jeweils durch ein Ventil, bevorzugt Kugelhahnventil, verschließbar ist. Durch das Verschließen des Abflusses und/oder des Einlasses kann die Menge eines Fluids innerhalb der Zwischenspeicher-Dosiereinheit kontrolliert werden. Beispielsweise kann die Durchflussmenge des Fluids kontrolliert werden. Das Fluid kann zudem vorteilhafterweise über einen Zeitraum kumulativ gesammelt werden, indem vorzugsweise der Einlass geöffnet und der Abfluss geschlossen ist.

Besonders bevorzugt ist das Ventil dabei als ein Kugelhahnventil ausgestaltet. Kugelhahnventile haben im allgemeinen kleine Abmessungen und können auch bei einem hohen Druck eine ausreichende Dichtheit gewährleisten. Darüber hinaus wird auch eine schnelle Betätigung erreicht. Bevorzugt kann das Kugelhahnventil motorgesteuert geöffnet und geschlossen werden. Zudem haben Kugelhähne einen großen Durchlassquerschnitt und benötigen vorteilhafterweise keine Schmiermittel, die zu einer Verunreinigung der Probe führen würden. Vorteilhaft ist auch, dass ein Kugelhahn nur ein sehr geringes Totvolumen hat, da dieses direkt im Volumenstrom situiert wird. Dies ist für eine hohe Probenqualität wichtig ist, damit es nicht zu einer Probenverschleppung kommt. Der volle Durchlassquerschnitt der Leitung wird bevorzugt beim Öffnen frei gemacht, was eine wichtige Voraussetzung bei gravitativem Einfüllen ist, damit die Flüssigkeitssäule vom Auffangtrichter (bevorzugt Probengewinnungseinheit) bis zum Auffanggefäß (bevorzugt Behältnis) von allein in Bewegung kommt.

Das Kugelhahnventil ist bevorzugt ausgesucht aus der Gruppe:
- einteiliger Kugelhahn mit reduziertem Durchgang und Innengewinde, wobei sich "einteilig" auf das Gehäuse des Kugelhahns bezieht
- 2-teiligerKugelhahn mit vollem Durchgang und Innengewinden (I/I), wobei sich "2-teilig" auf das Gehäuse des Kugelhahns bezieht, wie auch analog in den nachfolgenden Ausführungsformen
- 2-teiliger Kugelhahn mit vollem Durchgang und Innen/Außen-Gewinde (I/A)
- 3-teiliger Kugelhahn mit vollem Durchgang, Innengewinde und ISO-TOP (Stellenantrieb)
- 3-Wege Kugelhahn mit vollem Durchgang, T oder L Bohrung, Innengewinde und ISO-TOP 5211 für Stelleantrieb
- Mini Kugelhahn I/I oder I/A
- Einteiliger Kompakt-Kugelhahn
- 2-teiliger Flanschenkugelhahn
- 3-teiliger Kugelhahn mit Schneidring- oder Preßanschluss
- Kugelauslaufventil (KFE-Hahn)

Besonders bevorzugt ist das Kugelhahnventil ein 2/2 Wegeventil, welches zwei Anschlüsse und zwei Stellungen mit einer Durchgangsbohrung umfasst.

In einer weiteren bevorzugten Ausführungsform ist die Zwischenspeicher-Dosiereinheit dadurch gekennzeichnet, dass die Zwischenspeicher-Dosiereinheit eine Filtereinheit aufweist, die einen Filterträger und ein Filtersubstrat umfasst;
- wobei der Filterträger als ein Gittereinsatz mit einer Wandung und einem Aufsetzelement ausgestaltet ist;
- wobei in der Wandung und dem Aufsetzelement ein als Überlauf wirkender und/oder zur Entlüftung des Behältnisses dienender Kanal eingebracht vorliegt;
- wobei das Filtersubstrat auf dem Gittereinsatz aufliegt, und bevorzugt ein Vlies umfasst.

Neben der vorgenannten Separation des Fluids von Sedimenten, Schwimmstoffen, Schwebstoffen und/oder Partikeln oder Bodensatz anhand des Zweiwegauslasses dient die Filtereinheit zu einer weiteren Filterung der Probe bzw. des Fluids. Dies führt dazu, dass die Proben qualitativ besser sind und dadurch auch einer besseren Analyse unterzogen werden können. Aspekte, wie das Auftreten von Verunreinigungen von Proben, können durch die erfindungsgemäße Zwischenspeicher-Dosiereinheit minimiert werden.

Die Filterung des Fluids führt darüber hinaus nicht zur Verfälschung einer Probe, sondern dient lediglich der Vereinfachung der Analyse einer aufgenommenen Probe. Vielmehr ist die Filtereinheit vorzugsweise so eingerichtet, dass das Fluid in einer Weise gefiltert wird, dass die geo-chemischen Eigenschaften des Fluids und/oder der Probe erhalten bleiben. Vorteilhaft ist weiterhin, dass die vorgeschlagene Filtereinheit neben ihrer Funktion als Filter auch die Entlüftung des Behältnisses ermöglicht. Ebenso kann der in der Filtereinheit enthaltene Kanal als Überlauf wirken und verhindern, dass das Fluid innerhalb des Behältnisses ein bestimmtes Volumen überschreitet. Dies schützt u. a. vor einer Beschädigung der Elektronik im Gerätegehäuse.

Der Filterträger ist ferner bevorzugt ein Tragelement und/oder Stützelement, welches einen Filter, insbesondere ein Filtersubstrat stützen bzw. haltern oder aufnehmen kann. Der Filterträger haltert das Filtersubstrat dabei bevorzugt in der Art, dass ein Fluid das Filtersubstrat auf dem Weg von einem Einlass zu einem Auslass durchdringt. Besonders bevorzugt ist das Filtersubstrat so angeordnet, dass stromaufwärts und stromabwärts des Substrats genügend Freiraum vorhanden ist, damit das Fluid das Substrat ohne Stau passieren kann.

Im Sinne der Erfindung ist die Wandung in der Form eines Ringes ausgestaltet und weist an ihrem oberen Rand bevorzugt einen Absatz auf, welcher als Aufsetzelement bezeichnet wird. Die ringförmig ausgestaltete Wandung wird dabei bevorzugt im Inneren des Behältnisses der Zwischenspeicher-Dosiereinheit platziert und über das Aufsetzelement auf einen Behältnisrand aufgesetzt. Die ringförmig ausgestaltete Wandung weist außerdem bevorzugt einen Außendurchmesser auf, der im Wesentlichen so groß ist, wie der Innendurchmesser des Behältnisses in einem zylinderförmigen Abschnitt.

Begriffe wie "im Wesentlichen", "ungefähr", "etwa", "ca." etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1% und umfassen stets den exakten Wert. "Ähnlich" beschreibt bevorzugt Größen die "ungefähr gleich" sind. "Teilweise" beschreibt bevorzugt zu mindestens 5 %, besonders bevorzugt zu mindestens 10 %, und insbesondere zu mindestens 20 %, in einigen Fällen zu mindestens 40 %.

Vorzugsweise ist der Gittereinsatz in der Filtereinheit umfasst, welcher beispielsweise als ein Filterträger dienen kann. Der Gittereinsatz ist dabei in der Form ausgestaltet, dass dieser das Filtersubstrat aufnehmen bzw. haltern kann, wobei durch den Freiraum des Gitters das Fluid vorteilhaft abfließen kann und das Fluid nicht aufgestaut wird. Der Gittereinsatz ist bevorzugt kreisförmig ausgestaltet, wobei der Gittereinsatz bevorzugt innerhalb der ringförmigen Wandung eingesetzt wird. Die Wandung weist dabei bevorzugt ein Klemmelement auf, in dem der Gittereinsatz positionsfest eingeklemmt werden kann. Weiterhin entspricht der Durchmesser des Gittereinsatzes bevorzugt im Wesentlichen dem Innendurchmesser der ringförmigen Wandung. Vorzugsweise kann der Gittereinsatz über eine Presspassung in die ringförmige Wandung eingebracht werden, sodass der Übergang zwischen Wandung und Gittereinsatz wasserundurchlässig und somit dicht ist.

Die in der Filtereinheit umfasste Wandung und das Aufsetzelement weisen bevorzugt, wie geschildert, einen Kanal auf, wobei dieser als ein Überlauf wirken kann und/oder zur Entlüftung des Behältnisses dient. Der Kanal ist dabei bevorzugt in der Art ausgestaltet, dass ein Druckausgleich möglich ist, allerdings ein Stoff- oder Gasaustausch mit der Umgebung bzw. Außenbereich der Zwischenspeicher-Dosiereinheit verhindert wird.. Der Kanal führt insbesondere dazu, dass bei einem geschlossenen Einlassventil keine freien Oberflächen des aufgefangenen und im Behältnis vorliegenden Fluids direkt mit dem Außenbereich der Zwischenspeicher-Dosiereinheit in Kontakt steht, wodurch einer Verdunstung entgegengewirkt wird. Über einen bevorzugt nach unten führenden Schlauchanschluss zur Atmosphäre wird diesbezüglich bevorzugt eine freie Strömung bzw. Verdunstung verhindert (bei geschlossenem Einlassventil).

Es versteht sich, dass ein Filtersubstrat bevorzugt Feststoffe aus einem Fluid (Gas- oder Flüssigkeitsstrom) zurückhält. Vorzugsweise ist das Filtersubstrat ein flexibles Filtermedium, beispielsweise ein Gewebe, Papier oder Vlies (faserorientierte Vliese wie z. B. Filze und Wirrfaservliese wie z. B. Spinnvliese). Besonders bevorzugt handelt es sich bei dem Filtersubstrat um ein flächiges Vlies, welches in seiner gesamten Ausdehnung den Gittereinsatz überdecken kann und von diesem auch gehalten wird. Der große Vorteil der Filtration mit Vlies liegt in der Flexibilität. Durch den einfachen Austausch des Filtervlieses kann die Filtereinheit schnell für eine neue Filtrationsaufgabe umgerüstet werden. Bevorzugt kann das Filtervlies auch mit dem Gittereinsatz verklebt sein, wodurch vorteilhaft kein Totvolumen erzeugt wird (bspw. im Unterschied zur Klemmung). Für die erfindungsgemäße Filtrationsaufgabe können je nach Einsatzgebiet (bspw. abhängig vom eingesetzten Fluid) verschiedene Materialien zum Einsatz kommen, beispielsweise Kunstfasern (aus Polyester, Polyphenylensulfid, Polytetrafluorethylen etc.), keramische Fasern/Sinterkörper, Zellulosefasern, Glasfasern oder auch Metalle und Mischungen der vorgenannten Fasern. Diese können chemisch oder physikalisch behandelt werden und Oberflächenbeschichtungen aufweisen.

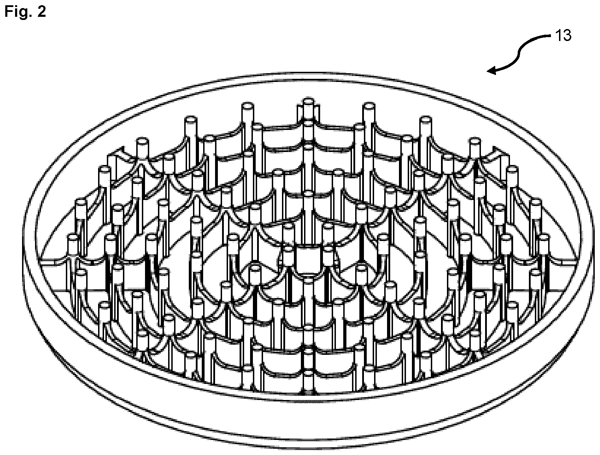

Der Gittereinsatz ist für das Filtervlies bevorzugt so konstruiert, dass möglichst wenig Wasser durch Anhaftung zurückgehalten wird. Ein Abtropfen von anhaftendem Wasser wird durch eine Säulenstruktur begünstigt, wobei die Säulen auf einer Oberseite abgerundet sind, auf denen bevorzugt das Filtervlies lagert (vgl. auch Fig.2). Gleichzeitig hat der Gittereinsatz bzw. die Säulen eine gewisse Höhe, die der Stabilität dient, bei gleichzeitig minimaler Oberfläche gegenüber einem herkömmlichen Gitter als Auflage.

In einer weiteren bevorzugten Ausführungsform ist der Filterträger ein 3D-gedrucktes Bauteil. Dabei werden bevorzugt alle Elemente des Filterträgers, nämlich die Wandung mit dem Aufsetzelement sowie der Gittereinsatz einzeln gefertigt. Dadurch dass der Filterträger gedruckt werden kann, gehen wesentliche Vorteile bei seiner Herstellung einher. So können jeweils in Bezug auf die Zwischenspeicher-Dosiereinheit individuelle Filterträger hergestellt werden, welche exakt auf das Behältnis abgestimmt sind. Die Zwischenspeicher-Dosiereinheit kann sich dabei vorzugsweise in Größe und Form (abhängig vom Einsatzzweck) unterscheiden. Weiterhin kann der Filterträger in seiner konstruktiven Ausgestaltung bevorzugt auch auf das Filtersubstrat abgestimmt sein. Der Filterträger muss zudem vorteilhafterweise nicht nachbearbeitet werden und kann jederzeit als Ersatzteil gefertigt werden. Ferner kann eine hohe Genauigkeit durch das Verfahren erzielt werden und darüber hinaus führt das Verfahren zu einer zeitlich sehr schnellen Herstellung.

In einer bevorzugten Ausführungsform beträgt die Druckzeit bevorzugt etwa 25h. Die Nachbearbeitung und das Einsetzen des Vlieses beträgt bevorzugt etwa 3h. Im Vergleich zur CNC-Herstellung sind innenliegende gewundene Kanäle allerdings vorteilhafterweise möglich.

Besonders bevorzugt ist der Filterträger ein Low Force Stereo Lithographie (LFS)-gedrucktes Bauteil. Low Force Stereolithography (LFS)Technologie ist eine bevorzugte Ausführung des SLA 3D-Drucks und ist einer durchschnittlichen Fachperson bekannt. Bei dieser bevorzugten Form des SLA-Drucks kommen ein flexibler Tank und lineare Beleuchtung zum Einsatz, wodurch die auf die zu fertigenden Teile wirkenden Kräfte deutlich reduziert, und eine verbesserte Oberflächenqualität und Druckgenauigkeit erzielt werden kann. Durch geringere Druckkräfte lassen sich berührungsempfindliche Stützstrukturen einsetzen, die leicht abgelöst werden können.

In weiteren bevorzugten Varianten sind auch weitere bevorzugte 3-D Druckverfahren für die Herstellung des Filterträgers möglich, so zum Beispiel FDM-Druck Verfahren.

In einer weiteren bevorzugten Ausführungsform weist die Zwischenspeicher-Dosiereinheit ein Gehäuse auf, welches das erfindungsgemäße Behältnis sowie Elektronik für eine Datenverarbeitungseinheit und/oder Steuereinheit umfasst. Der Bereich unterhalb der Filtereinheit innerhalb des Behältnisses wird dabei bevorzugt durch den Kanal frei nach draußen entlüftet. Weiterhin bevorzugt ist das Behältnis mit einem Deckelelement verschlossen, wobei das Deckelelement einerseits eine Öffnung für den Einlass und andererseits weitere Öffnungen und/oder Durchbrüche für das Einsaugen von Luft oberhalb der Filtereinheit aufweist. Die Öffnungen und/oder Durchbrüche für das Einsaugen von Luft umfassen bevorzugt ein Rückschlagventil, welches die Funktion hat, bei Unterdruck im Behälter (geschlossenes Einlassventil) das Ausströmen des Probenwassers zu ermöglichen.

Kommt es zu einem Überlaufen des Behältnisses kann bevorzugt unter- und oberhalb der Filtereinheit ein separater Anschluss das Wasser abführen. Beide Anschlüsse können über Schläuche an den Abfluss, bevorzugt an einer Auslassventileinheit, zusammengeführt und abgesondert werden. Das stellt sicher, dass keinerlei Wasser, egal bei welchen Betriebszustand, in das offene Gehäuse der Zwischenspeicher-Dosiereinheit laufen kann. Dort würde es möglicherweise Kondens auf der Elektronik verursachen.

In einer weiteren bevorzugten Ausführungsform betrifft die Erfindung ein System zur Entnahme von Proben eines Fluids, bevorzugt Wasser, umfassend
a. eine Probengewinnungseinheit, die dazu eingerichtet ist, ein Fluid bereitzustellen;
b. mindestens ein Probengefäß, das dazu eingerichtet ist, ein Fluid in sich aufzunehmen und zu speichern;

wobei zwischen der Probengewinnungseinheit und dem mindestens einem Probengefäß ein Fluidtransfer möglich ist;
dadurch gekennzeichnet, dass
der Probengewinnungseinheit und dem mindestens einem Probengefäß eine Zwischenspeicher-Dosiereinheit gemäß der in den vorherigen Ausführungsformen beschriebenen Art zwischengeschaltet ist.

Das vorgeschlagene System kann bevorzugt zur Probenahme für alle Wässer z.B.: Regen, Fluss, See, Quelle, Brunnen, Bohrung, Schnee, Bodenfeuchte, Sapflow (Pflanzenwasser) und inline in Prozessen z.B. Trinkwassergewinnung, Abwasser oder Brauchwasser sowie aller anderen Flüssigkeiten inkl. Kohlenwasserstoffe und auch Gase, verwendet werden. Eine Fachperson erkennt, dass die im Zusammenhang mit der erfindungsgemäßen Zwischenspeicher-Dosiereinheit erörterten Vorteile, technischen Effekte und bevorzugten Ausführungsformen analog für das erfindungsgemäße System zur Entnahme von Proben eines Fluids, bevorzugt Wasser gelten. Ebenfalls sind alle Vorteile, technischen Effekte und bevorzugten Ausführungsformen, welche im Kontext des Systems beschrieben werden, auf die Zwischenspeicher-Dosiereinheit übertragbar.

Insbesondere ermöglicht das System über die Zwischenspeicher-Dosiereinheit eine Filterung einer Probe (wobei die geo-chemischen Eigenschaften des Fluids beibehalten werden), einen kontrollierten Fluidtransfer und/oder eine über einen Zeitraum kumulativ gesammelte Probe, wodurch sich die die Qualität des Ergebnisses der Analyse der zu entnehmenden Proben verbessert. Das System bietet vor allem auch die Möglichkeit, einen besonders kompakten Entnahmeaufbau bereitzustellen, welcher nur wenige Systemkomponenten benötigt und - nachdem er einmal eingerichtet wurde - für eine große Anzahl an Proben und Analysen ohne weiterführende Änderungen verwendet werden kann. Das System ermöglicht aufgrund der geringen Anzahl an Komponenten eine besonders kompakte Bauform, welches individuell auf die Probenahme-Gegebenheiten angepasst werden kann.

Bevorzugt ist die Probengewinnungseinheit beispielsweise als ein Regenauffangtrichter, eine Pumpe, eine Saugkerze, bzw. ein gravitativer Zufluss oder ein Lysimeter zu verstehen. Vorteilhafterweise benötigen ein Regenauffangtrichter, eine Saugkerze, bzw. ein gravitativer Zufluss keine Energie für die Bereitstellung eines Fluids, wohingegen eine Pumpe eine vorteilhafte kontrollierte kontinuierliche Bereitstellung eines Fluids ermöglicht.

Es versteht sich, dass das erfindungsgemäße Probengefäß bevorzugt ein Gegenstand ist, der in seinem Inneren einen Hohlraum aufweist, der insbesondere dem Zweck dient, seinen Inhalt von seiner Umwelt zu trennen. Bei dem Probengefäß kann es sich dabei bevorzugt um einen biegeschlaffen und/oder einen im Wesentlichen starren Gegenstand handeln, wobei dieser aus einem Material ausgestaltet ist und/oder Mittel aufweist, die eine Probe hermetisch gegen die Atmosphäre verschließt.

Im Sinne der Erfindung ist ein Fluidtransfer bevorzugt möglich, wenn mindestens zwei Entitäten (zum Beispiel Probengewinnungseinheit, Probengefäß oder Zwischenspeicher-Dosiereinheit) miteinander in Fluidkommunikation stehen. Ein Fluidtransfer bedeutet insbesondere, dass ein Fluid von einer Entität zu einer anderen Entität über eine Leitung gelangen/fließen kann. Vorzugsweise kann eine Leitungsverbindung zwischen einem bevorzugten Probengefäß, einer Probengewinnungseinheit und/oder einer Zwischenspeicher-Dosiereinheit vorliegen. Die Zwischenspeicher-Dosiereinheit ist dabei bevorzugt der Probengewinnungseinheit und mindestens einem Probengefäß in der Leitungsverbindung zwischengeschaltet, wobei weiterhin ein Fluid von der Probengewinnungseinheit zum Probengefäß über die Zwischenspeicher-Dosiereinheit geleitet werden kann.

In einer weiteren bevorzugten Ausführungsform ist das System dadurch gekennzeichnet, dass das System ein mit der Zwischenspeicher-Dosiereinheit, insbesondere mit dem Steigrohr als zweiter Auslass der Zwischenspeicher-Dosiereinheit, in Verbindung stehendes Leitungssystem umfasst und das mindestens eine Probengefäß dem Leitungssystem zu- oder abschaltbar ist, wobei bei einem dem Leitungssystem zugeschalteten Probengefäß ein Fluidtransfer zwischen der Zwischenspeicher-Dosiereinheit und dem mindestens einen Probengefäß möglich ist.

Dies ermöglicht vorteilhaft eine kaskadierbare Baukasten-Struktur des erfindungsgemäßen Systems, wobei Probengefäße aneinandergereiht werden können und je nach Bedarf dem Leitungssystem durch eine individuelle Ansteuerung und geeignete Schnittstellen zu oder abgeschaltet werden können, wodurch jeweils ein Fluidtransfer zwischen der Zwischenspeicher-Dosiereinheit und dem jeweiligen Probengefäß realisiert werden kann. Des Weiteren wird eine beliebige Skalierung der Probenanzahl und Probengefäße ermöglicht. So kann mindestens ein Probengefäß dem Leitungssystem zu oder abgeschaltet werden, wobei das bevorzugte System nicht auf eine maximale Anzahl der Probengefäße begrenzt ist. Beispielsweise können - ohne darauf beschränkt zu sein - 2 bis mehrere 100 Probengefäße (theoretisch ist man nicht limitiert) dem Leitungssystem jeweils individuell zu oder abgeschaltet werden. Das System ist daher vorteilhaft in besonders vereinfachter Form zu jedem Zeitpunkt erweiterbar und ermöglicht die Erfindung flexibel auf die Anwendung zu konfigurieren.

Bevorzugt dient das Leitungssystem dem Transport von Fluiden (Gase und Flüssigkeiten). Vorzugsweise umfasst das Leitungssystem Rohre, Rohrverbindungen, Schläuche und/oder zugehörige Armaturen. Darüber hinaus werden bevorzugt auch Pumpvorrichtungen eingesetzt, um den Transport des Fluids zu unterstützen,

In einer weiteren bevorzugten Ausführungsform ist das System dadurch gekennzeichnet, dass das System eine Datenverarbeitungseinheit umfasst und dem mindestens einem Probengefäß eine Identifikationsnummer, eine Steuereinheit und ein Ventil zugeordnet ist, wobei die Steuereinheit in Datenverbindung mit der Datenverarbeitungseinheit steht und dazu eingerichtet ist, das Ventil zu öffnen und/oder zu schließen;
- wobei die Datenverarbeitungseinheit dazu eingerichtet ist, füllstandabhängige und/oder probengefäßabhängige Steuerungsbefehle zu erzeugen und anhand der Identifikationsnummer die Steuereinheit zu adressieren und die Steuerungsbefehle an die Steuereinheit zu übermitteln;
- wobei bei einem geöffneten Ventil das Probengefäß dem Leitungssystem zugeschaltet und bei einem geschlossenen Ventil das Probengefäß dem Leitungssystem abgeschaltet ist.

Dies führt vorteilhaft zu einem "smarten" System, welches insbesondere eine automatisierte Steuerungsintelligenz aufweist, wobei während der Entnahme einer Probe automatisiert Änderungen am Steuerungsprozess vorgenommen werden können. Das vorgeschlagene System zur Lösung der oben genannten Aufgabe ist aus dem Stand der Technik weder bekannt noch einer durchschnittlichen Fachperson nahegelegt. Das erfindungsgemäße System ist vielmehr als eine Abkehr vom Stand der Technik anzusehen, in welchem insbesondere die Probennahme ohne eine Vorfilterung eines Fluids erfolgt und darüber hinaus häufig manuelle Überwachungs-, Analyse-, Übertragungs- und/oder Bearbeitungsschritte miteinbezogen werden müssen. Wohingegen das erfindungsgemäße System die Möglichkeit bietet, ein voll automatisch ausgeführtes Verfahren zur Entnahme von diskreten Proben eines Fluids, bevorzugt Wasser durchzuführen, wobei insbesondere das Fluid vorgefiltert wird, aber die geo-chemischen Eigenschaften des Fluids und/oder der Probe beibehalten werden.

Im Sinne der Erfindung umfasst eine Datenverarbeitungseinheit vorzugsweise Mittel zum Erzeugen, Verarbeiten, Speichern, Senden und Empfangen von Daten. Die Datenverarbeitungseinheit steht bevorzugt mit einer oder mehreren Steuereinheiten und mit im System umfassten Sensoren (bspw. Fluidstandsensor) in Datenverbindung, wodurch Daten zwischen diesen Systemkomponenten bidirektional übertragen werden können. In einer bevorzugten Ausführungsform führt die Datenverarbeitungseinheit Algorithmen und Berechnungen aus, indem sie von den Steuereinheiten oder von Sensoren Input-Daten erhält und nach Ausführung der Algorithmen Output-Daten generiert, welche angepasste Steuerungsbefehle für die Steuereinheit umfassen. Der Vorteil einer solchen Anordnung ist, dass die Steuereinheiten und Sensoren nicht mit Komponenten (oder nur mit Komponenten geringer Kapazität) zur Datenverarbeitung (Prozessor) und Datenspeicherung bestückt werden müssen, wodurch vorteilhaft ein geringer Energieverbrauch erreicht wird, vorzugsweise wenn ein autonomer Feldbetrieb angestrebt wird. Ein weiterer Vorteil ist, dass die Datenverarbeitungseinheit für ihre Analyse bzw. Durchführung der Algorithmen eine Vielzahl von aufgenommenen Daten von verschiedenen Sensoren und Steuereinheiten miteinbeziehen kann, sodass eine weitreichende Analyse ermöglicht wird. Die Datenverarbeitungseinheit kann bevorzugt als ein Server ausgestaltet sein, welcher mit dem Internet verbunden ist und auf den weitere Endgeräte zugreifen können. So können vorteilhaft verschiedene verantwortliche Stellen oder Personen über die Entnahme einer Probe jederzeit informiert werden. Das System kann bevorzugt über eine auf der Datenverarbeitungseinheit installierte Software gesteuert werden, wobei diese auch über eine App-basierte Oberfläche drahtlos aus der Ferne über ein Endgerät konfiguriert werden kann.

Sofern eine Vielzahl von Probengefäßen mit zugeordneten Steuereinheiten dem System umfasst sind, sind die Steuereinheiten bevorzugt in einem elektronischen Bus-System miteinander verbunden. Dies führt vorteilhaft dazu, dass die Datenübertragung zwischen der Datenverarbeitungseinheit und den jeweiligen Steuereinheiten über einen gemeinsamen Übertragungsweg erfolgt. Die Ausführung der Verkabelung zwischen den an ein Bus-System angeschlossenen Steuereinheiten ist dabei bevorzugt einheitlich. Die Anzahl der benötigten Datenleitungen ist entsprechend deutlich geringer. Weiterhin sind die Datenleitungen auch in der Länge kürzer, da sie bevorzugt nicht individuell bis zur Datenverarbeitungseinheit verkabelt werden. Die Art, der Umfang und die Richtung der zu übertragenden Daten spielt zudem keine Rolle, solange das Bus-System nicht überlastet wird. Vorzugsweise weist das Bus-System eine Sende- und Empfangseinheit auf, welche drahtlos in Datenverbindung mit der Datenverarbeitungseinheit steht, wobei die Sende- und Empfangseinheit des Bus-Systems die Daten der Datenverarbeitungseinheit an die verschiedenen Steuereinheiten über die Datenleitung des Bus-Systems weiterleiten kann.

Im Sinne der Erfindung weist eine Steuereinheit bevorzugt Mittel zum Erzeugen, Verarbeiten, Speichern, Senden und Empfangen von Daten auf. Die Steuereinheit ist dabei bevorzugt mit der Datenverarbeitungseinheit in Datenverbindung. Weiterhin weist die Steuereinheit bevorzugt Mittel auf, die ein elektrisches Signal in mechanische Bewegungen umsetzen können und damit aktiv in einen gesteuerten Prozess eingreifen können. Erfindungsgemäß ist die Steuereinheit so ausgestaltet, dass sie eine gerichtete Beeinflussung des Verhaltens des Ventils ermöglicht. In einer bevorzugten Ausgestaltung ist die Steuereinheit in der Lage, das Ventil zu steuern sowie zu regeln. Beim Steuern wird mit Hilfe einer Stellgröße das Ventil beeinflusst - ohne, dass die Steuergröße auf die Stellgröße zurückwirkt. Das Regeln ist bevorzugt erfindungsgemäß ein Vorgang, bei dem der "IST-Wert" einer Größe ermittelt und durch Nachstellen einem "SOLL-Wert" angeglichen wird. Der "IST-Wert" wird beispielsweise bevorzugt durch Sensoren zur Ermittlung eines Füllstandes innerhalb eines Probengefäßes ermittelt. Anhand der Regelung des Ventils durch die Steuereinheit ist es vorteilhaft möglich auf Veränderungen des Füllstandes in Probengefäßen innerhalb kurzer Zeit zu reagieren und das Ventil dahingehend durch die Steuereinheit anzupassen. Die Steuereinheit weist diesbezüglich bevorzugt Microchips auf, welche an dem bevorzugten Bus-System angeschlossen sind. Die verteilte Steuerungsintelligenz mit Microchips spart Energie und eine aufwendige Montage. Die einzelnen Steuereinheiten bzw. Microchips werden bevorzugt über ein Bus-System in beliebiger Topologie verbunden. Allerdings kann dies vorzugsweise auch drahtlos durch entsprechende Schnittstellen realisiert werden. Dadurch muss nicht jedes einzelne Ventil einzeln verkabelt werden, um ein Ventil zu öffnen und/oder zu schließen.

Bevorzugt ist jedem Probengefäß sowie der zugehörigen Steuereinheit eine Identifikationsnummer zugeordnet. Die Identifikationsnummer kann dabei vorzugsweise eine einmalige alphanumerische Adressierung darstellen, anhand welcher jede dem System umfasste Steuereinheit erreichbar ist. Es versteht sich, dass im Sinne der Erfindung beliebig viele Probengefäße mit jeweils zugeordneten einzelnen Ventilen und eigener Steuereinheit dem System umfasst sind. Diese lassen sich beispielsweise in Serie schalten. Die einmalige Identifikationsnummer (ID) ist weiterhin bevorzugt in einem gespeicherten Protokoll enthalten und ermöglicht eine eindeutige Probenzuweisung.

Im Sinne der Erfindung sind abgeschaltete Probengefäße bevorzugt für sich gesehen abgeschlossen und insbesondere hermitesch abgeriegelt, sodass eine Langzeitkonservierung in den Probengefäßen ermöglicht wird.

Im Sinne der Erfindung sind füllstandabhängige Steuerungsbefehle bevorzugt Befehle, die beispielsweise abhängig von einem Füllstand in der Zwischenspeicher-Dosiereinheit und/oder in den einzelnen Probengefäßen sind (ohne darauf beschränkt zu sein). Zum Beispiel kann bei einem vollen Probengefäß der Steuerungsbefehl einen Verschluss des Probengefäßes durch ein Ventil umfassen. Die füllstandabhängigen Steuerungsbefehle können durch automatisierte Analysen der Datenverarbeitungseinheit erhalten werden, wobei diese bevorzugt über verschiedene im System umfasste Sensoren Informationen im Hinblick auf die jeweiligen Füllstände sämtlicher Probengefäße sowie der Zwischenspeicher-Dosiereinheit erhält.

Unter probengefäßabhängige Steuerungsbefehle sind unter anderem bevorzugt Befehle zu verstehen, die abhängig von einem Probengefäß sind, beispielsweise abhängig von dem Volumen eines Probengefäßes oder aber abhängig von einer bestimmten Auswahl bzw. Adressierung eines Probengefäßes (ohne darauf beschränkt zu sein). Die probengefäßabhängigen Steuerungsbefehle können durch automatisierte Analysen der Datenverarbeitungseinheit erhalten werden, oder aber durch eine Eingabe eines Nutzers über eine Eingabeschnittstelle (wenn zum Beispiel ein gezieltes Probengefäß dem Leitungssystem zu geschaltet bzw. das Probengefäß gefüllt werden soll und durch einen Nutzer ausgewählt wird).

In einer weiteren bevorzugten Ausführungsform ist das System dadurch gekennzeichnet, dass
- das Leitungssystem eine Inlinepumpe umfasst, welche dazu eingerichtet ist, einen Fluidstrom zwischen der Zwischenspeicher-Dosiereinheit und einem dem Leitungssystem zugeschalteten Probengefäß herzustellen;
- die Steuereinheit dazu eingerichtet ist, das Ventil über einen Aktuator zu steuern.

Als ein Aktuator ist bevorzugt eine antriebstechnische Baueinheit zu verstehen, die ein elektrisches Signal (von der Steuerungseinheit ausgegebener Befehle) in mechanische Bewegungen bzw. Veränderungen physikalischer Größen umsetzt und damit aktiv in den gesteuerten Prozess eingreift. Die Kombination aus Aktuator und Steuereinheit ermöglicht ein vollautomatisch durchführbares System, wobei die einzelnen Probengefäße kontrolliert befüllt werden können.

Das erfindungsgemäße System ist weiterhin bevorzugt dazu eingerichtet, einen Spülvorgang durchzuführen, indem alle Probengefäße dem Leitungssystem abgeschaltet werden und das Leitungssystem bevorzugt an seinem Leitungsende einen weiteren Abfluss aufweist. So kann unteranderem verhindert werden, dass einzelne Proben vermischt und entsprechend verfälscht werden.

In einer weiteren bevorzugten Ausführungsform ist die Inlinepumpe als eine Peristaltikpumpe ausgestaltet. Die Pumpe kann dabei vorzugsweise ein Fluid und/oder eine Probe in zwei Richtungen fördern. Nach dem vollständigen Abfüllen eines Probengefäßes läuft die Inlinepumpe vorzugsweise im Rückwärtsgang, wodurch ein "überstehender Luftraum" der einzelnen Probe komplett entleert werden kann. Dies dient unter anderem zur Sicherstellung, dass nur ein Fluid und kein Luft-Wasser-Gemisch gefördert wird. Zudem wird vorteilhafterweise die in der Probe und der Leitung bis zur Probe enthaltene Luft abgeschöpft, so dass keine chemischen Vorgänge zwischen eingeschlossener Luft und Probe stattfinden können.

In einer weiteren bevorzugten Ausführungsform ist das System dadurch gekennzeichnet, dass
- das Ventil als ein Kugelhahnventil, vorzugsweise als Dreiwege-Ventil, ausgestaltet ist;
- die Zwischenspeicher-Dosiereinheit einen Fluidstandsensor umfasst, der dazu eingerichtet ist den Füllstand des Fluids im Behältnis zu überwachen, wobei der Fluidstandsensor mit der Datenverarbeitungseinheit in Datenverbindung steht und dieser einen füllstandbezogenen Parameter bereitstellt;
- die Datenverarbeitungseinheit ist dazu eingerichtet, auf Basis des füllstandbezogenen Parameters füllstandabhängige Steuerungsbefehle zu erzeugen.

In einer bevorzugten Ausführungsform ist die Datenverarbeitungseinheit dazu eingerichtet die füllstandbezogenen Parameter des Fluidstandsensors zu analysieren und daraus folgend füllstandabhängige Steuerungsbefehle zu generieren. Die Analyse ist demnach bevorzugt als ein computerimplementierter Verfahrensschritt anzusehen. Eine solche Analyse kann sich dabei bevorzugt als ein Vergleich zwischen Referenzdaten darstellen oder aber auch durch eine Analyse mittels Algorithmen der künstlichen Intelligenz erfolgen.

Bevorzugt ist das Kugelhahnventil als Dreiwegeventil mit T-Bohrung in T2-Schaltung ausgelegt. Unbetätigt steht das T bevorzugt auf Durchfluss und die Probe strömt durch das Ventil hindurch (das jeweilige Probengefäß ist fest verschlossen; ein Fluidtransfer mit der Zwischenspeicher-Dosiereinheit ist nicht möglich). Betätigt stellt sich das T bevorzugt zu dem jeweiligen Probengefäß und lenkt den Probenfluss in dieses ab bis ein entsprechendes Probenvolumen erreicht ist (ein Fluidtransfer mit der Zwischenspeicher-Dosiereinheit ist möglich). Anschließend stellt sich das Ventil wieder auf unbetätigt/ Durchflussstellung und verschließt die Probe dauerhaft und hermetisch dicht. Der Aktuator betätigt dabei vorzugsweise den Kugelhahn über einen steckbaren Antrieb mit festen Anschlägen um 90°.

In einer weiteren bevorzugten Ausführungsform ist das System dadurch gekennzeichnet, dass das System mindestens zwei Probengefäße umfasst und die Probengefäße innerhalb des Leitungssystems nacheinander befüllt werden können. Die Befüllung von mehr als einem Probengefäß ermöglicht die Sicherung einer Vielzahl unterschiedlicher Proben. Dadurch, dass das vorgeschlagene System mit einer beliebigen Zahl an Probengefäßen erweiterbar ist, sind der Anzahl an verschiedenen Proben keine Grenzen gesetzt. Die bevorzugte Datenverarbeitungseinheit kann dabei die Befüllung sämtlicher Probengefäße protokollieren, sodass vorteilhafterweise auch im Nachhinein bei einer Vielzahl von Proben jedes Probengefäß mindestens ein Zeitpunkt sowie ein Fluid zugeordnet werden kann.

In einer weiteren bevorzugten Ausführungsform betrifft die Erfindung ein Verfahren zur Entnahme von Proben eines Fluids, bevorzugt Wasser dadurch gekennzeichnet, dass
a. ein Fluid durch eine Probengewinnungseinheit einer Zwischenspeicher-Dosiereinheit gemäß einem oder mehreren Ansprüche 1 bis 3 bereitgestellt wird;
b. ein Fluidstandsensor kontinuierlich einen Füllstand des Fluids in dem Behältnis der Zwischenspeicher-Dosiereinheit erfasst und einen füllstandbezogenen Parameter einer Datenverarbeitungseinheit bereitstellt;
c. die Datenverarbeitungseinheit probengefäßabhängige und füllstandabhängige Steuerungsbefehle generiert;
d. die Steuerungsbefehle an eine einem Probengefäß zugeordnete Steuereinheit übermittelt werden;
e. die Steuereinheit über einen Aktuator ein dem Probengefäß zugeordnetes Ventil öffnet,
f. ein Fluidtransfer zwischen der Zwischenspeicher-Dosiereinheit und dem Probengefäß erfolgt, indem eine Inline-Pumpe einen Fluidstrom erzeugt;
g. das Probengefäß das Fluid in sich aufnimmt und speichert sowie hermetisch abschließt, wobei vor dem hermetischen Abschluss des Probengefäßes die Inline-Pumpe bevorzugt im Rückwärtsgang läuft, um die in dem Probengefäß und der Leitung enthaltene Luft abzuschöpfen

Die Kombination der vorgeschlagenen Verfahrensschritte führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinanderstehen. Ein wichtiger Vorteil des erfindungsgemäßen Verfahrens ist die Erforderlichkeit von äußerst wenigen Verfahrensschritten und Systemkomponenten, wobei trotzdem eine überaus robuste und fehlerresistente Infrastruktur zur Entnahme von Proben eines Fluids, bevorzugt Wasser generiert wird. Das Verfahren lässt sich aufgrund seiner wenigen Systemkomponenten und Verfahrensschritte vorteilhaft in besonders vereinfachter Weise in schon vorhandene Systeme oder Vorrichtungen durch Hinzunahme einer Zwischenspeicher Dosiereinheit und einer Datenverarbeitungseinheit implementieren. Die Innovation des erfindungsgemäßen Verfahrens besteht weiterhin darin, dass die Entnahme einer Probe vollautomatisch erfolgen kann, wobei das Verfahren darüber hinaus eine äußerst hohe Zuverlässigkeit aufweist.

### FIGUREN

Im Folgenden soll die Erfindung anhand von Figuren näher erläutert werden, ohne auf diese beschränkt zu sein.

### Kurzbeschreibung der Figuren

- **Fig. 1**: Schnittdarstellung eines bevorzugten Behältnisses mit einer bevorzugten Filtereinheit für eine bevorzugte Zwischenspeicher-Dosiereinheit
- **Fig. 2**: Darstellung eines bevorzugten Gittereinsatzes
- **Fig. 3**: Schnittdarstellung einer bevorzugten Zwischenspeicher-Dosiereinheit
- **Fig. 4**: Darstellung eines bevorzugten Leitungssystem mit acht zu- und abschaltbaren Probengefäßen
- **Fig. 5**: Schnittdarstellung eines bevorzugten Probengefäßes sowie Anschluss an ein bevorzugtes Leitungssystem
- **Fig. 6**: Schematische Darstellung eines bevorzugten Systems

### Detaillierte Beschreibung der Figuren

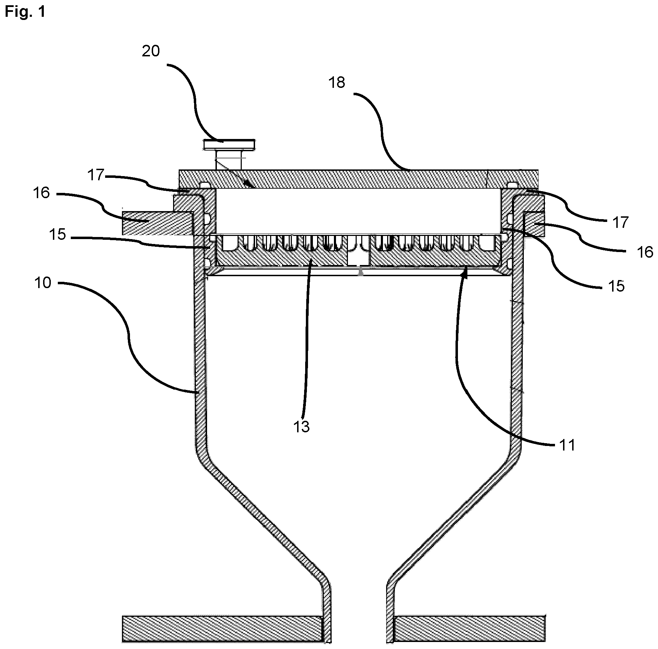

**Fig. 1** illustriert eine Schnittdarstellung eines bevorzugten Behältnisses **10** mit einer bevorzugten Filtereinheit **11** für eine bevorzugte Zwischenspeicher-Dosiereinheit **1.** Das Behältnis **10** ist vorzugsweise in zwei Abschnitte einzuteilen, nämlich in einen oberen zylinderförmigen Abschnitt und einen unteren sich konisch in Richtung eines Auslasses verjüngenden Abschnitt. Der obere zylinderförmige Abschnitt, weist einen Überstand auf, welcher auf eine Behältnishalterung **16** aufgelegt werden kann. Die Filtereinheit **11** liegt bevorzugt innerhalb des Behältnisses **10** eingebracht im oberen zylinderförmigen Abschnitt vor. Die Filtereinheit **11** umfasst dabei bevorzugt eine Wandung **15** mit einem Aufsetzelement **17,** wobei die Wandung **15** ringförmig ausgestaltet ist, also einen geschlossenen Ring bildet, und an ihrem oberen Rand einen Absatz aufweist, welcher als Aufsetzelement **17** bezeichnet wird. Die ringförmig ausgestaltete Wandung **15** wird im Inneren des Behältnisses **10** platziert und über das Aufsetzelement **17** auf dem oberen Behältnisrand, , insbesondere auf den Überstand des Behältnisses, aufgesetzt. Innerhalb der ringförmigen Wandung **15** wird bevorzugt ein Gittereinsatz **13** eingesetzt. Die Wandung **15** weist ein Klemmelement auf, in dem der Gittereinsatz **13** positionsfest eingeklemmt werden kann. Auf den oberen zylinderförmigen Abschnitt des Behältnisses **10** wird bevorzugt ein Deckelelement **18** aufgesetzt, wobei das Aufsetzelement **17** zwischen Deckelelement **18** und dem Rand des Behältnisses **10** positioniert ist. Das Deckelelement **18** umfasst vorzugsweise zwei, von oben betrachtet, diagonal gegenüberliegende Rändelschrauben **20,** hoher Bauform, die in die Behältnishalterung **16** eingeschraubt werden können, wobei zwischen der Halterung **16** und dem Deckelelement **18** der Überstand des Behältnisrandes und das Aufsetzelement **17** kraftschlüssig eingeklemmt werden können ( In Fig 1 ist aufgrund der Schnittansicht oben links nur eine von beiden zu erkennen). In der Wandung **15** sind bevorzugt Nuten für zwei O-Ringe, die einen Beitrag zum positionsfesten Halten der Filtereinheit **11** leisten. Die O-Ringe, als Dichtungen, zusammen mit einer bevorzugten dritten Dichtung oben unter dem Deckelelement **18** sind für eine Abdichtung nach außen hin erforderlich. Die Filtereinheit **11** sowie der Gittereinsatz **13** können bevorzugt werkzeuglos von Hand entnommen werden z.B. zur Reinigung. Die gesamte Zwischenspeicher Dosiereinheit **1,** insbesondere das Behältnis **10,** kann ebenfalls werkzeuglos nach Lösen der beiden genannten Rändelschrauben **20** zur Reinigung oder Austausch entnommen werden. Die ringförmig ausgestaltete Wandung **15** weist außerdem bevorzugt einen Außendurchmesser auf, der im Wesentlichen so groß ist wie der Innendurchmesser des Behältnisses **10** im oberen zylinderförmigen Abschnitt.

**Fig. 2** zeigt eine Darstellung eines bevorzugten Gittereinsatzes **13.** Der Gittereinsatz **13** ist bevorzugt dazu eingerichtet, in eine als Ring ausgestaltete Wandung **15** eingebracht zu werden, wobei der Durchmesser des Gittereinsatzes **13** im Wesentlichen dem Innendurchmesser der ringförmigen Wandung **15** entspricht. Vorzugsweise kann der Gittereinsatz **13** über eine Presspassung in die ringförmige Wandung **15** eingebracht werden, sodass der Übergang zwischen Wandung **15** und Gittereinsatz **13** wasserundurchlässig und somit dicht ist. Der Gittereinsatz **13** ist ferner dazu eingerichtet, auf Gitterelementen ein Filtersubstrat aufzunehmen. Das Filtersubstrat kann beispielsweise ein Vlies umfassen.

Der bevorzugte Gittereinsatz **13** soll einerseits eine optimale Auflage (gleichmäßig verteilte Auflagepunkte) und eine Abstützung für das sehr filigrane und feine Filtervlies (bevorzugt 105µm Maschenweite, stärker bevorzugt 300µm, insbesondere maximal 500µm) schaffen. Andererseits soll der Gittereinsatz **13** bei Benetzung mit dem Probenfluid möglichst wenig davon zurückhalten. Aus diesem Grunde umfasst der Gittereinsatz **13** vorzugsweise kleine Säulen, auf denen das Vlies aufliegt (Filtervlies und Gittereinsatz **13** werden bevorzugt am Außenumfang miteinander verklebt). Dadurch wird eine möglichst geringe Rückhaltung erreicht, wenn ein Fluidfilm Tropfen bildet, welche eine Ablaufbahn erhalten, sich dann vereinigen und als großer Tropfen schwer genug werden, um ins Gefäß zu fallen. Die Gitterstege zwischen den Abtropfsäulen sind bevorzugt schmal und anzahlmäßig möglichst gering gehalten und haben nur die Aufgabe die vorgenannten Säulen zu halten. Die Säulen können in einem weiteren Schritt in einem unteren Teilabschnitt Abtropfspitzen umfassen. Alle inneren Kreuzungspunkte bzw. Innenkanten der Gitterstege sind weiterhin vorzugsweise mit kleinen Radien verrundet, um Anhaftungen zu minimieren.

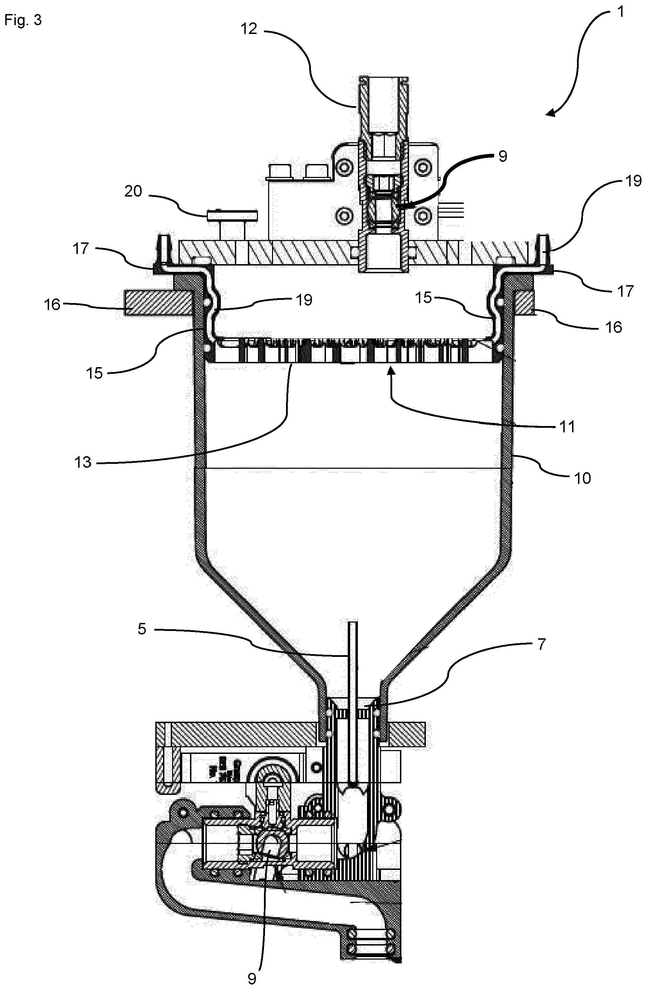

**Fig. 3** zeigt eine Schnittdarstellung einer bevorzugten Zwischenspeicher-Dosiereinheit **1.** Die bevorzugte Zwischenspeicher-Dosiereinheit **1** umfasst insbesondere ein Behältnis **10** mit einem Einlass **12** und einem Zweiwegauslass. Das Behältnis **10** verjüngt sich dabei konisch in Richtung des Zweiwegauslasses. Der Zweiwegauslass umfasst ein Steigrohr **5** als einen ersten Auslass und einen Abfluss **7** als einen zweiten Auslass. Der Abfluss **7** des Zweiwegauslasses und der Einlass **12** sind vorzugsweise durch ein Kugelhahnventil **9** verschließbar. Darüber hinaus weist die Zwischenspeicher-Dosiereinheit **1** eine Filtereinheit **11** auf. Die Filtereinheit **11** besteht dabei bevorzugt aus einer ringförmig ausgestalteten Wandung **15** mit einem Aufsetzelement **17,** wobei die ringförmige Wandung **15** einen Außendurchmesser aufweist, der im Wesentlichen so groß ist, wie der Innendurchmesser des Behältnisses **10.** Die Filtereinheit **11** ist vorzugsweise über zwei umlaufende O-Ringe (aus EPDM oder NBR) mit dem Behältnis **10** abgedichtet. Das Aufsetzelement **17** der Wandung **15** ist bevorzugt auf den oberen Rand des Behältnisses **10** aufgesetzt. Die als ein Ring ausgestattete Wandung **15** weist zudem eine Formgebung auf, die es ermöglicht einen Gittereinsatz **13,** im Inneren aufzunehmen und festzuklemmen. Vorzugsweise ist in der Wandung **15** und dem Aufsetzelement **17** ein als Überlauf wirkender und/oder zur Entlüftung des Behältnisses **10** dienender Kanal **19** eingebracht. Weiterhin liegt bevorzugt ein Filtersubstrat auf dem Gittereinsatz **13** auf, wobei das Filtersubstrat bevorzugt ein Vlies umfasst. Der Kanal **19** ermöglicht einen Druckausgleich, wobei keine freien Oberflächen eines gesammelten Fluids in direktem Kontakt mit der Außenseite des Behältnisses **10** stehen. Dadurch wirkt diese Anordnung der Verdunstung entgegen. Über einen nach unten führenden Schlauchanschluss zur Atmosphäre wird bei geschlossenem Einlassventil **9** vorteilhafterweise eine freie Strömung bzw. Verdunstung verhindert. Solange jedoch das Einlassventil **9** offensteht, ist ein Gasaustausch des Behältnisses **10** mit der Atmosphäre möglich.

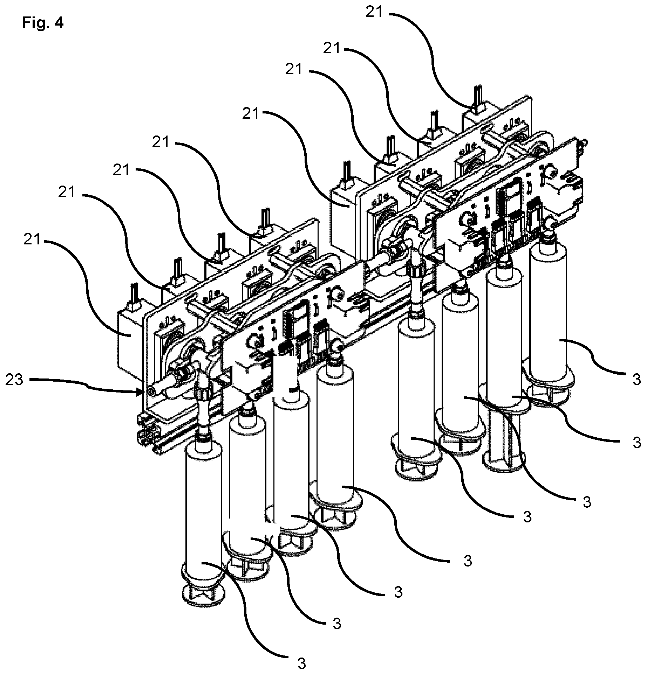

**Fig. 4** zeigt ein bevorzugtes Leitungssystem **23** mit acht zu- und abschaltbaren Probengefäßen **3.** Jedem Probengefäß **3** ist bevorzugt eine Identifikationsnummer, eine Steuereinheit **21** und ein Ventil zugeordnet. Bevorzugt ist jede Steuereinheit **21** in Datenverbindung mit einer zentralen Datenverarbeitungseinheit. Die Datenverarbeitungseinheit ist insbesondere dazu eingerichtet, füllstandabhängige und/oder probengefäßabhängige Steuerungsbefehle zu erzeugen und anhand der Identifikationsnummer eine Steuereinheit **21** zu adressieren und die Steuerungsbefehle an die ausgewählte Steuereinheit **21** zu übermitteln. Die Steuereinheit **21** ist hingegen dazu eingerichtet, das Ventil unter Berücksichtigung der Steuerungsbefehle über einen Aktuator zu steuern und das einem Probengefäß **3** zugeordnete Ventil zu öffnen und/oder zu schließen.

Die Probengefäße bestehen vorliegend bevorzugt aus Vierergruppen, die frei verschiebbar und positionierbar auf Montageprofilen mit Nutensteinen angeordnet werden. Eine universelle Anordnung in allen Raumrichtungen und für alle Gefäßgrößen ist so realisierbar. Auch für Laboraufbauten, Messhütteneinbauten, Gerätekisteneinbauten eignet sich damit das Konzept. Die Antriebe der Dreiwege-Ventile werden vorzugsweise über Servoantriebe mit Rückmeldung der Ventilposition bewerkstelligt.

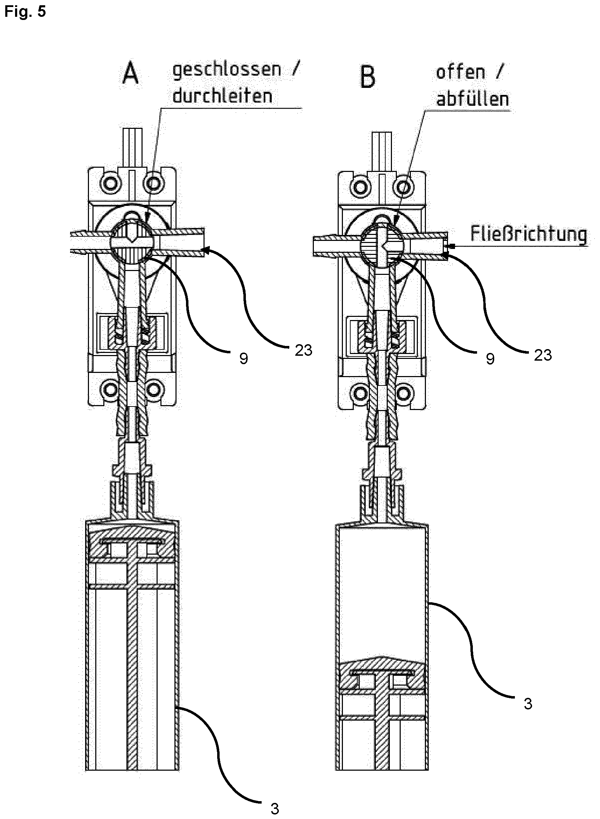

**Fig. 5** illustriert eine Schnittdarstellung eines bevorzugten Probengefäßes **3** sowie dessen Anschluss an ein bevorzugtes Leitungssystem **23.** Das Probengefäß **3** ist bevorzugt als eine handelsüblichen Spritze ausgestaltet, die einen beweglichen, gedichteten Kolben umfasst, der ein veränderliches, aber dennoch abgeschlossenes Probenvolumen bereitstellt. Das System umfasst bevorzugt eine Inlinepumpe, welche dazu eingerichtet ist, einen Fluidstrom zwischen der Zwischenspeicher-Dosiereinheit 1 (nicht in **Fig. 5** dargestellt) und einem dem Leitungssystem **23** zugeschalteten Probengefäß 3 herzustellen. Das Leitungssystem **23** umfasst bevorzugt das Material FEP (Tetrafluorethylen-Hexafluorpropylen-Copolymer), welches nur äußerst geringe Diffusionsoffenheit besitzt und damit gute Langzeit-Lagerbedingungen für eine Probenaufbewahrung bewirkt. Dem Probengefäß 3 ist vorzugsweise ein Ventil zugeordnet, welches über eine Steuereinheit **21** anhand eines Aktuators in eine offene und/oder geschlossene Position geschaltet werden kann.

Die in **Fig. 5A** dargestellte Ausführungsform zeigt ein abgeschaltetes Probengefäß **3,** wobei das Ventil ein Kugelhahnventil **9** (T-Ventil) ist und in einer geschlossenen Position vorliegt. Entsprechend kann das Fluid nicht in das Probengefäß 3 eingeleitet werden und wird durch das Kugelhahnventil **9** (T-Ventil) über das Probengefäß **3** hinweg geleitet. In der geschlossenen Position des Ventils **9** wird das Probengefäß **3** hermitesch verschlossen.

Die in **Fig. 5B** dargestellte Ausführungsform zeigt hingegen ein dem Leitungssystem **23** zugeschaltetes Probengefäß 3, indem ein Kugelhahnventil **9** (T-Ventil) in eine offene Position geschaltet wird. In dieser offenen Position kann die Probe in das Probengefäß **3** abgefüllt werden. Dabei wird das Fluid durch das Kugelhahnventil **9** (T-Ventil) in das Probengefäß **3** geleitet.

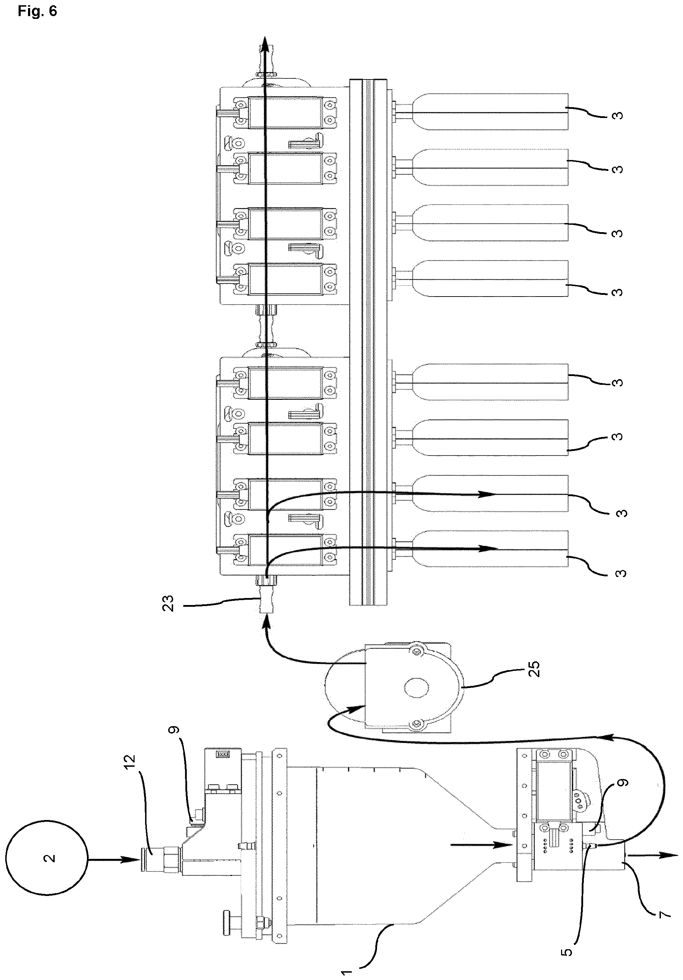

**Fig. 6** zeigt eine schematische Darstellung eines bevorzugten Systems zur Entnahme von Proben eines Fluids, bevorzugt Wasser. Das bevorzugte System umfasst insbesondere eine Probengewinnungseinheit **2** sowie acht Probengefäße **3,** wobei die Probengewinnungseinheit **2** dazu eingerichtet ist, ein Fluid bereitzustellen und die jeweiligen Probengefäße **3** dazu eingerichtet sind, ein Fluid in sich aufzunehmen und zu speichern. Zwischen der Probengewinnungseinheit **2** und den jeweiligen Probengefäßen **3** ist bevorzugt ein Fluidtransfer möglich. Darüber hinaus ist der Probengewinnungseinheit **2** und den Probengefäßen 3 eine Zwischenspeicher-Dosiereinheit **1** zwischengeschaltet.

Die Probengewinnungseinheit **2** kann beispielsweise als ein Regenauffangtrichter, eine Pumpe, eine Saugkerze, bzw. ein gravitativer Zufluss oder ein Lysimeter ausgestaltet sein. So können z.B. bei Starkregenereignissen zunächst größere Volumina aufgefangen werden, aus denen anschließend eine oder mehrere kleine Proben entnommen werden soll.

Eine Probe wird dabei zunächst über die Probengewinnungseinheit **2** in die Zwischenspeicher-Dosiereinheit **1** überführt. Die Zwischenspeicher-Dosiereinheit **1** umfasst bevorzugt einen Einlass **12,** welcher bevorzugt durch ein motorgesteuertes Kugelhahnventil **9** verschlossen werden kann. Weiterhin verfügt die Zwischenspeicher-Dosiereinheit **1** ein Behältnis **10** und eine Filtereinheit **11** (nicht in Fig. 6 dargestellt), um die bereitgestellte Probe filtern und sammeln zu können. Weiterhin ist in der Zwischenspeicher-Dosiereinheit **1** ein Zweiwegauslass konzipiert, nämlich ein Steigrohr **5** als ein erster Auslass und ein Abfluss **7** als ein zweiter Auslass. Das Steigrohr **5** dient zur Probenentnahme aus einer Wassersäule, um die Verschmutzung des Systems durch Schwebstoffe und Bodensatz zu verhindern. Der Abfluss **7** dient hingegen dazu, überschüssiges Probenfluid nach einem Abfüllvorgang gravitativ zu entfernen. Der Abfluss **7** ist dabei bevorzugt ebenfalls durch ein motorbetriebenes Kugelhahnventil **9** verschlossen.

Über das Steigrohr **5** wird bevorzugt mit einer Peristaltikpumpe **25** die Probe anschließend in ein bevorzugtes Leitungssystem **23** befördert. Vor jedem Abfüllvorgang wird das ganze Leitungssystem **23** mit der Probe gespült, um eine Verschleppung einer vorhergehenden Probe vorzubeugen. Den Probengefäßen **3** ist vorzugsweise ein Ventil zugeordnet, welche jeweils über Steuereinheiten **21** mit Hilfe eines Aktuators in eine offene und/oder geschlossene Position geschaltet werden können. Die Probengefäße **3** können dadurch individuell dem Leitungssystem **23** zugeschaltet werden, sodass diese mit der Probe befüllt werden können.

Im Zuge eines Spülvorgangs werden alle Probengefäße **3** dem Leitungssystem **23** abgeschaltet, wobei das Leitungssystem **23** bevorzugt an seinem Leitungsende einen weiteren Abfluss aufweist. Die Probengefäße **3** sind bevorzugt hermetisch abgeschlossen und gewährleisten dementsprechend eine Langzeitkonservierung der Probe ohne Austausch mit der Umgebung. Vor dem hermetischen Abschluss des Probengefäßes **3** läuft die Peristaltikpumpe **25** bevorzugt im Rückwärtsgang, um die in dem Probengefäß **3** und der Leitung enthaltene Luft abzuschöpfen.

### BEZUGSZEICHENLISTE

- 1: Zwischenspeicher-Dosiereinheit
- 2: Probengewinnungseinheit
- 3: Probengefäß
- 5: Steigrohr
- 7: Abfluss
- 9: Kugelhahnventil
- 10: Behältnis
- 11: Filtereinheit
- 12: Einlass
- 13: Gittereinsatz
- 15: Wandung
- 16: Behältnishalterung
- 17: Aufsetzelement
- 18: Deckelelement
- 19: Kanal (Entlüftung/Überlauf)
- 20: Rändelschraube
- 21: Steuereinheit
- 23: Leitungssystem
- 25: Peristaltikpumpe

## Patentansprüche

1. Zwischenspeicher-Dosiereinheit (1) für die Entnahme von Proben eines Fluids umfassend ein Behältnis (10) mit einem Einlass (12) und einem Zweiwegauslass, wobei der Zweiwegauslass
- ein Steigrohr (5) als einen ersten Auslass und
- einen Abfluss (7) als einen zweiten Auslass umfasst,
**dadurch gekennzeichnet, dass**
dass Steigrohr innerhalb des Behältnisses so ausgerichtet ist, dass das Fluid gravitativ in die Auslassöffnung eingebracht werden kann.

2. Zwischenspeicher-Dosiereinheit (1) nach Anspruch 1 wobei der Abfluss (7) des Zweiwegauslasses und/oder der Einlass (12) jeweils durch ein Ventil, bevorzugt Kugelhahnventil (9), verschließbar ist.

3. Zwischenspeicher-Dosiereinheit (1) nach einem oder beiden der vorhergehenden Ansprüche wobei die Zwischenspeicher-Dosiereinheit (1) eine Filtereinheit (11) aufweist, die einen Filterträger und ein Filtersubstrat umfasst;
- wobei der Filterträger als ein Gittereinsatz (13) mit einer Wandung (15) und einem Aufsetzelement (17) ausgestaltet ist;
- wobei in der Wandung (15) und dem Aufsetzelement (17) ein als Überlauf wirkender und/oder zur Entlüftung des Behältnisses dienender Kanal (19) eingebracht vorliegt,
- wobei das Filtersubstrat auf dem Gittereinsatz (13) aufliegt, und bevorzugt ein Vlies umfasst.

4. System zur Entnahme von Proben eines Fluids, bevorzugt Wasser, umfassend
a. eine Probengewinnungseinheit (2), die dazu eingerichtet ist, ein Fluid bereitzustellen;
b. mindestens ein Probengefäß (3), das dazu eingerichtet ist, ein Fluid in sich aufzunehmen und zu speichern;
wobei zwischen der Probengewinnungseinheit (2) und dem mindestens einem Probengefäß (3) ein Fluidtransfer möglich ist;
wobei der Probengewinnungseinheit (2) und dem mindestens einem Probengefäß (3) eine Zwischenspeicher-Dosiereinheit (1) gemäß einem oder mehreren der vorgehenden Ansprüche zwischengeschaltet ist.

5. System nach Anspruch 4
wobei das System ein mit der Zwischenspeicher-Dosiereinheit (1), insbesondere mit dem Steigrohr (5) als zweiter Auslass der Zwischenspeicher-Dosiereinheit (1), in Verbindung stehendes Leitungssystem (23) umfasst und das mindestens eine Probengefäß (3) dem Leitungssystem (23) zu- oder abschaltbar ist, wobei bei einem dem Leitungssystem (23) zugeschalteten Probengefäß (3) ein Fluidtransfer zwischen der Zwischenspeicher-Dosiereinheit (1) und dem mindestens einen Probengefäß (3) möglich ist.

6. System nach einem oder beiden der vorhergehenden Ansprüche 4 und 5
wobei das System eine Datenverarbeitungseinheit umfasst und dem mindestens einem Probengefäß (3) eine Identifikationsnummer, eine Steuereinheit (21) und ein Ventil zugeordnet ist, wobei die Steuereinheit (21) in Datenverbindung mit der Datenverarbeitungseinheit steht und dazu eingerichtet ist, das Ventil zu öffnen und/oder zu schließen;
wobei die Datenverarbeitungseinheit dazu eingerichtet ist, füllstandabhängige und/oder probengefäßabhängige Steuerungsbefehle zu erzeugen und anhand der Identifikationsnummer die Steuereinheit (21) zu adressieren und die Steuerungsbefehle an Steuereinheit (21) zu übermitteln;
wobei bei einem geöffneten Ventil das Probengefäß (3) dem Leitungssystem (23) zugeschaltet und bei einem geschlossenen Ventil das Probengefäß (3) dem Leitungssystem (23) abgeschaltet ist.

7. System nach Anspruch 6
wobei das Leitungssystem (23) eine Inlinepumpe umfasst, welche dazu eingerichtet ist, einen Fluidstrom zwischen der Zwischenspeicher-Dosiereinheit (1) und einem dem Leitungssystem (23) zugeschalteten Probengefäß (3) herzustellen;
die Steuereinheit (21) dazu eingerichtet ist, das Ventil über einen Aktuator zu steuern.

8. System nach einem oder mehreren der vorhergehenden Ansprüche 6 und 7
wobei das Ventil als ein Kugelhahnventil (9), vorzugsweise als Dreiwege-Ventil, ausgestaltet ist;
die Zwischenspeicher-Dosiereinheit (1) einen Fluidstandsensor umfasst, der dazu eingerichtet ist den Füllstand des Fluids im Behältnis (10) zu überwachen, wobei der Fluidstandsensor mit der Datenverarbeitungseinheit in Datenverbindung steht und dieser einen füllstandbezogenen Parameter bereitstellt;
die Datenverarbeitungseinheit ist dazu eingerichtet, auf Basis des füllstandbezogenen Parameters füllstandabhängige Steuerungsbefehle zu erzeugen.

9. System nach einem oder mehreren der vorhergehenden Ansprüche 5 - 8
wobei das System mindestens zwei Probengefäße (3) umfasst und die Probengefäße (3) innerhalb des Leitungssystems (23) nacheinander befüllt werden können.

10. Verfahren zur Entnahme von Proben eines Fluids, bevorzugt Wasser
**dadurch gekennzeichnet, dass**
a. ein Fluid durch eine Probengewinnungseinheit (2) einer Zwischenspeicher-Dosiereinheit (1) gemäß einem oder mehreren Ansprüche 1 bis 3 bereitgestellt wird;
b. ein Fluidstandsensor kontinuierlich einen Füllstand des Fluids in dem Behältnis (10) der Zwischenspeicher-Dosiereinheit (1) erfasst und einen füllstandbezogenen Parameter einer Datenverarbeitungseinheit bereitstellt;
c. die Datenverarbeitungseinheit probengefäßabhängige und füllstandabhängige Steuerungsbefehle generiert;
d. die Steuerungsbefehle an eine einem Probengefäß (3) zugeordnete Steuereinheit (21) übermittelt werden;
e. die Steuereinheit (21) über einen Aktuator ein dem Probengefäß (3) zugeordnetes Ventil öffnet;
f. ein Fluidtransfer zwischen der Zwischenspeicher-Dosiereinheit (1) und dem Probengefäß (3) erfolgt, indem eine Inline-Pumpe einen Fluidstrom erzeugt;
g. das Probengefäß (3) das Fluid in sich aufnimmt und speichert sowie hermetisch abschließt, wobei vor dem hermetischen Abschluss des Probengefäßes die Inline-Pumpe bevorzugt im Rückwärtsgang läuft, um die in dem Probengefäß und der Leitung enthaltene Luft abzuschöpfen.

## Claims

1. An intermediate storage dosing unit (1) for taking samples of a fluid comprising a container (10) with an inlet (12) and a two-way outlet, wherein the two-way outlet comprises
- a riser pipe (5) as a first outlet, and
- a drain (7) as a second outlet,
**characterized in that**
the riser pipe is aligned within the container so that the fluid can be gravitationally introduced into the drain opening.

2. The intermediate storage dosing unit (1) according to claim 1, wherein the drain (7) of the two-way outlet and/or the inlet (12) can each be closed by a valve, preferably a ball valve (9).

3. The intermediate storage dosing unit (1) according to one or both of the preceding claims, wherein the intermediate storage dosing unit (1) has a filter unit (11) which comprises a filter support and a filter substrate;
- wherein the filter support is designed as a grid insert (13) with a wall (15) and a fitting element (17);
- wherein a channel (19) acting as an overflow and/or serving to vent the container is arranged in the wall (15) and in the fitting element (17),
- wherein the filter substrate rests on the grid insert (13), and preferably comprises a fleece.

4. A system for taking samples of a fluid, preferably water, comprising
a. sample collection unit (2) configured to provide a fluid;
b. at least one sample vessel (3) configured to receive and store a fluid;
wherein a fluid transfer is possible between the sample collection unit (2) and the at least one sample vessel (3);
wherein an intermediate storage dosing unit (1) according to one or several of the preceding claims is interposed between the sample collection unit (2) and the at least one sample vessel (3).

5. The system according to claim 4, wherein the system comprises a conduit system (23) connected to the intermediate storage dosing unit (1), in particular to the riser pipe (5) as a second outlet of the intermediate storage dosing unit (1), and the at least one sample vessel (3) can be connected to or disconnected from the conduit system (23), wherein, when a sample vessel (3) is connected to the conduit system (23), a fluid transfer between the intermediate storage dosing unit (1) and the at least one sample vessel (3) is possible.

6. The system according to one or both of the preceding claims 4 and 5, wherein the system comprises a data processing unit and the at least one sample vessel (3) is associated with an identification number, a control unit (21), and a valve, wherein the control unit (21) is in data communication with the data processing unit and is configured to open and/or close the valve;
wherein the data processing unit is configured to generate fill level-dependent and/or sample vessel-dependent control commands and to address, by means of the identification number, the control unit (21) and to transmit the control commands to the control unit (21);
wherein the sample vessel (3) is connected to the conduit system (23) when the valve is open and the sample vessel (3) is disconnected from the conduit system (23) when the valve is closed.

7. The system according to claim 6, wherein the conduit system (23) comprises an inline pump which is configured to produce a fluid flow between the intermediate storage dosing unit (1) and a sample vessel (3) connected to the conduit system (23); the control unit (21) is configured to control the valve via an actuator.

8. The system according to one or several of the preceding claims 6 and 7, wherein the valve is designed as a ball valve (9), preferably as a three-way valve;
the intermediate storage dosing unit (1) comprises a fluid level sensor which is configured to monitor the fill level of the fluid in the container (10), wherein the fluid level sensor is in data communication with the data processing unit and the latter provides a fill level-related parameter;
the data processing unit is configured to generate fill level-dependent control commands based on the fill level-related parameter.

9. The system according to one or several of the preceding claims 5-8, wherein the system comprises at least two sample vessels (3) and the sample vessels (3) within the conduit system (23)can be filled one after the other.

10. A method for taking samples of a fluid, preferably water
**characterized in that**
a. a fluid is provided by a sample collection unit (2) of an intermediate storage dosing unit (1) according to one or several of claims 1 to 3;
b. a fluid level sensor continuously detects a fill level of the fluid in the container (10) of the intermediate storage dosing unit (1) and provides a fill level-related parameter to a data processing unit;
c. the data processing unit generates sample vessel-dependent and fill level-dependent control commands;
d. the control commands are transmitted to a control unit (21) assigned to a sample vessel (3);
e. the control unit (21) opens a valve assigned to the sample vessel (3) via an actuator;
f. a fluid transfer takes place between the intermediate storage dosing unit (1) and the sample vessel (3), **in that** an inline pump generates a fluid flow;
g. the sample vessel (3) receives and stores the fluid and seals it hermetically, wherein the inline pump preferably runs in reverse before the sample vessel is hermetically sealed in order to draw off the air contained in the sample vessel and in the conduit.

## Revendications

1. Unité de dosage formant dispositif de stockage intermédiaire (1) pour prélever des échantillons d'un fluide comprenant un récipient (10) avec une entrée (12) et une sortie à deux voies, dans laquelle la sortie à deux voies **comprend**
- une colonne montante (5) comme première sortie et
- un drain (7) comme seconde sortie,
**caractérisée en ce que**
la colonne montante est alignée à l'intérieur du récipient de sorte que le fluide puisse être introduit par gravité dans l'ouverture de sortie.

2. Unité de dosage formant dispositif de stockage intermédiaire (1) selon la revendication 1, dans laquelle le drain (7) de la sortie à deux voies et/ou l'entrée (12) peut chacun être fermé par une vanne, de préférence une vanne à boisseau sphérique (9).

3. Unité de dosage formant dispositif de stockage intermédiaire (1) selon l'une ou les deux revendications précédentes, dans laquelle l'unité de dosage formant dispositif de stockage intermédiaire (1) comporte une unité de filtrage (11) qui comprend un support de filtre et un substrat de filtre ;
- dans laquelle le support de filtre est conçu comme un insert de grille (13) avec une paroi (15) et un élément de retenue (17) ;
- dans laquelle un canal (19) faisant office de trop-plein et/ou servant à ventiler le récipient est prévu dans la paroi (15) et l'élément de retenue (17),
- dans laquelle le substrat de filtre repose sur l'insert de grille (13) et comprend de préférence un matériau non tissé.

4. Système de prélèvement des échantillons d'un fluide, de préférence de l'eau, comprenant
a. une unité de collecte d'échantillon (2) configurée pour fournir un fluide ;
b. au moins un récipient d'échantillon (3) configuré pour recevoir et stocker un fluide ;
dans lequel un transfert de fluide est possible entre l'unité de collecte d'échantillon (2) et l'au moins un récipient d'échantillon (3) ;
dans lequel une unité de dosage formant dispositif de stockage intermédiaire (1) selon une ou plusieurs des revendications précédentes est interposée entre l'unité de collecte d'échantillon (2) et l'au moins un récipient d'échantillon (3).

5. Système selon la revendication 4, dans lequel le système comprend un système de conduite (23) relié à l'unité de dosage formant dispositif de stockage intermédiaire (1), en particulier à la colonne montante (5) en tant que seconde sortie de l'unité de dosage formant dispositif de stockage intermédiaire (1), et l'au moins un récipient d'échantillon (3) peut être connecté au système de conduite (23) ou déconnecté de celui-ci, dans lequel lorsqu'un récipient d'échantillon (3) est connecté au système de conduite (23), un transfert de fluide est possible entre l'unité de dosage formant dispositif de stockage intermédiaire (1) et l'au moins un récipient d'échantillon (3).

6. Système selon l'une ou les deux revendications précédentes 4 et 5, dans lequel le système comprend une unité de traitement de données et un numéro d'identification, une unité de commande (21) et une vanne sont attribués à l'au moins un récipient d'échantillon (3), dans lequel l'unité de commande (21) est en communication de données avec l'unité de traitement de données et est configurée pour ouvrir et/ou fermer la vanne ;
dans lequel l'unité de traitement de données est configurée pour générer des ordres de commande dépendant du niveau de remplissage et/ou dépendant du récipient d'échantillon et pour adresser l'unité de commande (21) à l'aide du numéro d'identification et pour transmettre les ordres de commande à l'unité de commande (21) ;
dans lequel, lorsque la vanne est ouverte, le récipient d'échantillon (3) est connecté au système de conduite (23) et lorsque la vanne est fermée, le récipient d'échantillon (3) est déconnecté du système de conduite (23).

7. Système selon la revendication 6, dans lequel le système de conduite (23) comprend une pompe en ligne qui est configurée pour produire un flux de fluide entre l'unité de dosage formant dispositif de stockage intermédiaire (1) et un récipient d'échantillon (3) connecté au système de conduite (23) ;
l'unité de commande (21) est configurée pour commander la vanne via un actionneur.

8. Système selon une ou plusieurs des revendications précédentes 6 et 7, dans lequel la vanne est conçue comme une vanne à boisseau sphérique (9), de préférence comme une vanne à trois voies ;
l'unité de dosage formant dispositif de stockage intermédiaire (1) comprend un capteur de niveau de fluide qui est configuré pour surveiller le niveau de remplissage du fluide dans le récipient (10), dans lequel le capteur de niveau de fluide est en communication de données avec l'unité de traitement de données et cette dernière fournit un paramètre lié au niveau de remplissage ;
l'unité de traitement de données est configurée pour générer des ordres de commande dépendant du niveau de remplissage en fonction du paramètre lié au niveau de remplissage.

9. Système selon une ou plusieurs des revendications précédentes 5 à 8, dans lequel le système comprend au moins deux récipients d'échantillon (3) et les récipients d'échantillon (3) peuvent être remplis l'un après l'autre dans le système de conduite (23).

10. Procédé de prélèvement des échantillons d'un fluide, de préférence de l'eau
**caractérisé en ce que**
a. un fluide est fourni par une unité de collecte d'échantillon (2) d'une unité de dosage formant dispositif de stockage intermédiaire (1) selon une ou plusieurs des revendications 1 à 3 ;
b. un capteur de niveau de fluide détecte en continu un niveau de remplissage du fluide dans le récipient (10) de l'unité de dosage formant dispositif de stockage intermédiaire (1) et fournit un paramètre lié au niveau de remplissage à une unité de traitement de données ;
c. l'unité de traitement de données génère des ordres de commande dépendant du récipient d'échantillon et du niveau de remplissage ;
d. les ordres de commande sont transmis à une unité de commande (21) affectée à un récipient d'échantillon (3) ;
e. l'unité de commande (21) ouvre une vanne affectée au récipient d'échantillon (3) via un actionneur ;
f. un transfert de fluide entre l'unité de dosage formant dispositif de stockage intermédiaire (1) et le récipient d'échantillon (3) s'effectue par une pompe en ligne générant un flux de fluide ;
g. le récipient d'échantillon (3) reçoit et stocke le fluide et le scelle hermétiquement, dans lequel la pompe en ligne fonctionne de préférence en marche arrière avant que le récipient d'échantillon ne soit hermétiquement scellé afin d'écumer l'air contenu dans le récipient d'échantillon et la conduite.
